# EUROPÄISCHE PATENTSCHRIFT

(11) **EP 3 197 692 B1**
(45) Veröffentlichungstag und Bekanntmachung des Hinweises auf die Patenterteilung: **01.01.2020**
(21) Anmeldenummer: 15774883.1
(22) Anmeldetag: 22.09.2015
(51) Int. Cl.: B60D 1/06, B60D 1/24, B60D 1/62

(54) **ANHÄNGEKUPPLUNG MIT EINEM SENSOR**
TRAILER COUPLING COMPRISING A SENSOR
ATTACHE DE REMORQUE POURVUE D'UN CAPTEUR

(30) Priorität: 23.09.2014 DE 102014013812
(43) Veröffentlichungstag der Anmeldung: 02.08.2017
(60) Teilanmeldung: 19209461.3
(73) Patentinhaber: WESTFALIA - Automotive GmbH, 33378 Rheda-Wiedenbrück (DE)
(72) Erfinder: SCHEIPS, René, 33605 Bielefeld (DE); SIELHORST, Bernhard, 33378 Rheda-Wiedenbrück (DE)
(74) Vertreter: Patentanwälte Bregenzer und Reule Partnerschaftsgesellschaft mbB
(86) Internationale Anmeldenummer: PCT/EP2015/071737
(87) Internationale Veröffentlichungsnummer: WO 2016/046205

(56) Entgegenhaltungen:
- EP-A1- 2 452 839
- EP-A2- 1 199 547
- EP-A2- 2 363 307
- DE-A1-102010 029 414

## Beschreibung

Die Erfindung betrifft eine Anhängekupplung für ein Kraftfahrzeug zum Anhängen eines Anhängers oder Tragen eines Lastenträgers, gemäß dem Oberbegriff des Anspruchs 1.

Eine derartige Anhängekupplung ist beispielsweise in EP 2 452 839 A1 erläutert. Die DE 10 2010 029 414 A1 offenbart eine Anhängekupplung gemäß dem Oberbegriff des Anspruchs 1.

Zur Erfassung von an einer Anhängekupplung angreifenden Lasten ist es schon seit einiger Zeit bekannt, unter anderem aus DE 10 2012 021 352 A1, beispielsweise Dehnungsmessstreifen an den Körper des Kupplungsarmes anzukleben.

Wenn sich der Kupplungsarm dehnt oder gestaucht wird, wird der aufgeklebt Dehnungsmessstreifen ebenfalls mit verformt, was dazu führt, dass der Sensor (Dehnungsmessstreifen) ein die Verformung repräsentierendes Messsignal abgibt. Anhand dieses Messsignals kann beispielsweise eine Stützlast oder Zuglast ermittelt werden.

Wenn ein derartiger Sensor nicht mehr funktioniert, also beispielsweise beschädigt ist, muss er aufwendig entfernt und durch einen anderen Sensor ersetzt werden. Dann beginnt eine neue Kalibrierung, damit die Messergebnisse, die der Sensor liefert, zutreffend sind.

Es ist daher die Aufgabe der Erfindung, eine verbesserte Anhängekupplung mit einem Sensor zur Erfassung einer Verformung des Kupplungsarms durch eine an dem Kupplungsarm angreifende Last bereitzustellen.

Zur Lösung der Aufgabe ist eine Anhängekupplung gemäß der technischen Lehre des Anspruchs 1 vorgesehen.

Es ist ein Grundgedanke der vorliegenden Erfindung, dass dediziert für den mindestens einen Sensor mindestens eine Vertiefung vorgesehen ist. Die Vertiefung schafft beispielsweise einen verbesserten Schutz für den Sensor, weil dieser nicht oder jedenfalls weniger weit vor die Außenkontur des Kupplungsarms im Bereich der Vertiefung vorsteht. Der Sensor, beispielsweise ein den Sensor umgebendes Sensorgehäuse, ist dadurch weniger der Gefahr von Beschädigungen ausgesetzt.

Die Außenumfangskontur des Kupplungsarms kann durchaus auch ohnehin Vertiefungen aufweisen, beispielsweise zwischen Verstärkungsrippen. Derartige Vertiefungen können an sich für Sensoren genutzt werden, auch bei einer erfindungsgemäßen Anhängekupplung. Im Sinne der Erfindung ist jedoch eine Vertiefung speziell für den Sensor vorgesehen und beispielsweise durch eine Aushöhlung, zum Beispiel eine Bohrung oder Ausfräsung, in den Körper oder Kern des Kupplungsarms hergestellt.

Es versteht sich, dass mehrere Vertiefungen und mehrere Sensoren vorhanden sein können. Weiterhin kann eine Vertiefung unterschiedlich tiefe Abschnitte aufweisen. In einer jeweiligen Vertiefung können auch mehrere Sensoren angeordnet sein, beispielsweise Sensoren, die unterschiedliche Messprinzipien haben. So können beispielsweise zur Verbesserung der Messqualität in einer jeweiligen Vertiefung ein kapazitiver Sensor sowie ein Dehnungsmessstreifen angeordnet sein.

Das Kraftfahrzeug kann nebenbei bemerkt ein Kraftfahrzeug mit Verbrennungsmotor, Elektromotor oder beidem sein.

Der mindestens eine Sensor ist vorzugsweise als ein Sensormodul ausgestaltet. Eine an sich eigenständige Erfindung stellt ein Sensormodul für eine Anhängekupplung für ein Kraftfahrzeug, die einen Kupplungsarm zum Anhängen eines Anhängers oder zum Tragen eines Lastenträgers aufweist, wobei das Sensormodul mindestens einen zur Anordnung an dem Kupplungsarm vorgesehenen Sensor zur Erfassung einer Verformung des Kupplungsarms durch eine an dem Kupplungsarm angreifende Last aufweist, dar, bei dem vorgesehen ist, dass das Sensormodul eine Außenumfangskontur aufweist, die mindestens an eine Innenumfangskontur einer an einer Außenumfangskontur des Kupplungsarms vorgesehenen Vertiefung angepasst ist, in oder an welcher der mindestens eine Sensor angeordnet oder gehalten ist.

Das Sensormodul bildet also eine Baueinheit, die an dem Kupplungsarm anordenbar ist. Die Außenumfangskontur des Sensormoduls, beispielsweise eines Gehäuses des Sensormoduls, passt in oder zur Innenumfangskontur der Vertiefung an dem Kupplungsarm, beispielsweise für eine formschlüssige Aufnahme.

Es ist aber auch möglich, dass beispielsweise Durchtrittsöffnungen für Schrauben oder dergleichen andere Befestigungsbolzen an dem Sensormodul mit entsprechenden Aufnahmen oder Öffnungen, beispielsweise Schraubgewinden oder Schraubaufnahmen, an oder in der Vertiefung des Kupplungsarms korrelieren, sodass das Sensormodul an die Anhängekupplung bzw. den Kupplungsarm anschraubbar ist.

Einen weiteren vorteilhaften Aspekt stellt es dar, wenn das Sensormodul ein Sensorgehäuse aufweist, in welchem der mindestens eine Sensor angeordnet ist. In dem Sensorgehäuse können auch Sensorteile angeordnet sein, die bei der Montage des Sensormoduls am Kupplungsarm individuell in Kontakt mit dem Kupplungsarm gelangen, beispielsweise ein erstes Sensorteil und ein zweites Sensorteil. Die Sensorteile sind zweckmäßigerweise trotz der Anordnung in dem Sensorgehäuse bei einer Verformung des Kupplungsarms relativ zueinander beweglich, sodass sie unterschiedliche Abstände zueinander haben können und auf diesem Wege eine Verformung des Kupplungsarms durch eine entsprechende Abstandsmessung, beispielsweise eine kapazitive, optische oder induktive, durch das Sensormodul durchgeführt werden kann.

Der Kupplungsarm kann an einer am Kraftfahrzeug zu befestigenden oder befestigten Fahrzeughalterung fest angeordnet sein, also unlösbar, beispielsweise verschraubt oder mit dieser verschweißt. Weiterhin ist eine Steckverbindung zwischen Kupplungsarm und Fahrzeughalterung möglich. Schließlich kann der Kupplungsarm an der Fahrzeughalterung auch beweglich gelagert sein, beispielsweise anhand eines Schwenklagers schwenkbeweglich und/oder eines Schiebelagers schiebebeweglich.

Am freien Endbereich des Kupplungsarms befindet sich zweckmäßigerweise ein Kuppelstück, beispielsweise eine Kupplungskugel oder auch ein sonstiges Formstück, das zum Anhängen eines Anhängers geeignet ist. Selbstverständlich kann das Kuppelstück auch zum Ankuppeln eines Lastenträgers geeignet sein, das heißt der Kupplungsarm gemäß der Erfindung kann auch dazu vorgesehen sein, einen Lastenträger zu tragen. Beispielsweise befindet sich dann am freien Endbereich des Kupplungsarms ein Steckvorsprung oder eine Steckaufnahme.

Die Ausgestaltung der Vertiefung kann vielfältig sein, d.h. dass sie beispielsweise eine den Kupplungsarm durchsetzende Durchgangsbohrung umfasst. Aber auch ein Sackloch oder eine Tasche, eine Mulde oder dergleichen können als Vertiefung vorgesehen sein. Die Vertiefung kann, muss aber nicht zylindrisch sein.

Die Vertiefung umfasst beispielsweise eine Aufnahme, in welcher der Sensor zumindest teilweise aufgenommen ist. Die Vertiefung kann aber auch sozusagen weniger tief sein, d.h. dass der Sensor zumindest ein Stück weit vor die Vertiefung vorsteht, also trotz der Vertiefung etwas vor die Außenkontur des Kupplungsarms in der Umgebung der Vertiefung vorsteht.

Die mindestens eine Vertiefung ist eine dediziert für den mindestens einen Sensor vorgesehene Vertiefung, d.h. insbesondere eine nachträglich an dem Kupplungsarm angebrachte Vertiefung, beispielsweise eine Bohrung oder Aushöhlung. Weiterhin kann die Vertiefung beispielsweise dadurch hergestellt sein, dass beim Gießen ein entsprechender Vorsprung der Gussform in den Bereich der Kavität für den Kupplungsarm vorsteht. Jedenfalls ist die Vertiefung zweckmäßigerweise nicht dadurch gebildet, dass der Sensor beispielsweise zwischen vor den Grundkörper des Kupplungsarms vorstehenden Verstärkungsrippen angebracht ist, sondern in einer speziell vorgesehenen, vor die Außenkontur, beispielsweise runde oder polygonale Außenkontur, des Kupplungsarms zurückspringenden Vertiefung.

Bevorzugt ist es, wenn die mindestens eine Vertiefung eine mit der Außenkontur des Sensors korrespondierende Innenkontur zur formschlüssigen Aufnahme des Sensors aufweist. Die Innenkontur kann den Sensor insgesamt formschlüssig halten. Es ist aber auch möglich, dass die Innenkontur formschlüssig haltende Abschnitte aufweist, d.h. dass sie beispielsweise an Eckbereichen des Sensors angreifende und den Sensor dort formschlüssig haltende Innenkontur-Abschnitte hat.

Weiterhin ist es vorteilhaft, wenn der mindestens eine Sensor durch eine die Vertiefung zumindest teilweise oder ganz überdeckende Abdeckung vor Umwelteinflüssen geschützt ist. Beispielsweise kann ein Wandabschnitt des Kupplungsarms über die Vertiefung vorstehen. Der Sensor kann beispielsweise von einer Seite her in die Vertiefung eingesteckt werden und dabei unter die Abdeckung, beispielsweise eine Deckwand, gelangen. Es ist aber auch möglich, dass ein Deckel vorgesehen ist, der, nachdem der Sensor in die Vertiefung eingesetzt ist, über der Vertiefung angebracht wird und so den Sensor schützt. Der Sensor ist vorzugsweise in der Vertiefung ein gekapselt oder gekapselt untergebracht. Mithin bilden also der Kupplungsarm und der vorgenannte Deckel zweckmäßigerweise eine Kapselung für den Sensor.

Der vorgenannte Deckel kann beispielsweise dazu dienen, den Sensor im Bereich der Vertiefung mit der Oberfläche des Kupplungsarms zu verspannen. Der Deckel kann beispielsweise auf den Sensor drücken und diesen so in die Vertiefung hinein spannen.

Es stellt nämlich eine vorteilhafte Maßnahme dar, wenn der mindestens eine Sensor im Bereich der Vertiefung mit der Oberfläche des Kupplungsarms verspannt ist. Das kann beispielsweise durch eine Verrastung oder Verklemmung bewirkt werden. Beispielsweise ist der mindestens eine Sensor in der Vertiefung durch ein Klemmelement verklemmt, zum Beispiel einen Keil. Aber auch eine Verschraubung, wie in der Zeichnung dargestellt, stellt eine vorteilhafte Maßnahme dar.

Beispielsweise kann der Sensor sozusagen als Widerlager oder Zuganker ausgestaltet sein, der mit Schrauben in der Vertiefung verspannt ist. Die Schrauben können beispielsweise den Sensor durchsetzen und in den Kupplungsarm eingeschraubt sein, wo weitere, für die Schrauben vorgesehene Vertiefungen vorhanden sind. Es ist aber auch möglich, dass der Sensor sozusagen in einer als Tasche oder eines sonstigen den Sensor aufnehmenden Vertiefung aufgenommen ist und Schrauben sozusagen von außen her, nämlich den Kupplungsarm durchdringend, in den Sensor eindringende Schrauben sind. Anstelle von Schrauben können selbstverständlich auch andere, insbesondere bolzenartige, Spannelemente vorgesehen sein.

Eine vorteilhafte Ausführungsform sieht jedenfalls vor, dass das jeweilige Verbindungselement den Sensor etwa rechtwinkelig gegen die jeweils zugeordnete Kontaktfläche des Kupplungsarms spannt.

Eine weitere Maßnahme kann vorsehen, dass der mindestens eine Sensor im Bereich der Vertiefung mit der Oberfläche des Kupplungsarms verklebt ist. Eine derartige Maßnahme kann es zwar erschweren, den Sensor bei Bedarf auszutauschen, kann aber den Halt des Sensors an der Oberfläche des Kupplungsarms zu verbessern.

Der Sensor ist erfindungsgemäß mehrteilig, das heißt dass er beispielsweise ein erstes Sensorteil und ein zweites Sensorteil (weitere Sensorteile sind möglich) aufweist, die in einem Abstand zueinander jeweils mit dem Kupplungsarm, also dessen Oberfläche, verbunden sind und bei einer Verformung des Kupplungsarms eine Relativbewegung zueinander machen. Beispielsweise sind die Sensorteile mit der Oberfläche des Kupplungsarms verspannt. Wenn also die jeweiligen Oberflächenabschnitte, mit denen jeweils eines der Sensorteile verbunden sind, aufgrund einer Verformung des Kupplungsarms relative Bewegungen zueinander machen, werden die Sensorteile mit bewegt. Dabei ist es möglich, dass eine sozusagen eindimensionale Messung vorgenommen wird, d.h. eine reine Abstandsmessung zwischen den beiden Sensorteilen.

Die Sensorteile können in einem Schutzgehäuse oder Sensorgehäuse angeordnet sein.

Es ist möglich, dass der Sensor zwischen den Sensorteilen in Kontakt mit dem Kupplungsarm ist. Allerdings ist durchaus auch ein die Beweglichkeit der Sensorteile relativ zueinander nicht oder nur wenig behindernde Kontakt zwischen den Sensor und der Oberfläche des Kupplungsarms auch zwischen den Sensorteilen durchaus möglich.

Die Sensorteile sind erfindungsgemäß diskret und nicht miteinander verbunden.

Es ist möglich, dass die Sensorteile ganz frei stehen. Es ist aber auch möglich, dass die Sensorteile in einem Sensorgehäuse angeordnet sind, jedoch innerhalb des Sensorgehäuses beweglich sind. Möglich ist auch, dass das Sensorgehäuse zwischen den Sensorteilen eine Beweglichkeit aufweist, beispielsweise teleskopierbar oder verformbar ist.

Erfindungsgemäß haben die Sensorteile einander gegenüberliegende kapazitive Flächen. Die Flächen können frontal einander gegenüberliegen. Es ist aber auch möglich, dass das eine Sensorteil mit einem Vorsprung in das andere Sensorteil eingreift und auf diesem Wege unterschiedliche Kapazitäten, die elektrisch messbar sind, zwischen den beiden Sensorteilen vorhanden sind. Selbstverständlich können zwischen den Sensorteilen auch andere Messmethoden verwendet werden, beispielsweise anderweitige Abstandsmessmethoden, zum Beispiel eine optische Messung, eine Messung mit Ultraschall, Radar oder dergleichen.

Weiterhin ist es möglich, dass die Sensorteile durch mindestens ein Sensorelement miteinander verbunden sind. Bei dem Sensorelement handelt es sich beispielsweise um einen Dehnungsmessstreifen. Aber auch andere Bauteile, beispielsweise Piezo-Elemente, die eine Verformung erfahren können und in Abhängigkeit von der Verformung ein Sensorsignal liefern, sind ohne weiteres denkbar.

Eine bevorzugte Ausführungsform der Erfindung sieht vor, dass in einem Abstand zueinander mindestens zwei Vertiefungen an dem Kupplungsarm vorhanden sind. Diese beiden Vertiefungen können sich von einer sozusagen großen Vertiefung, in welcher beispielsweise ein Sensorgehäuse oder ein Sensorelement des Sensors, sozusagen die Messtechnik oder der Sensor als solcher, aufgenommen ist, weg erstrecken. Der Sensor ist in oder an jeder der Vertiefungen mit einem Verbindungsbereich oder einem Verbindungselement, zum Beispiel einem Rastvorsprung, einem Bolzen (zum Beispiel einer Schraube) oder dergleichen mit dem Kupplungsarm verbunden. Die Verbindung kann beispielsweise auch eine Klebeverbindung sein. Es ist möglich, dass eine oder beide der Vertiefungen beispielsweise ein Schraubgewinde oder eine Bohrung oder Durchtrittsöffnung oder ein Sackloch für eine Schraube oder einen Bolzen aufweist.

Wenn also die beiden Vertiefungen am Kupplungsarm eine relative Bewegung zueinander durchlaufen oder sich relativ zueinander bewegen, wird der mindestens eine Sensor betätigt. Beispielsweise ist der Sensor in den Vertiefungen verankert. Die Vertiefungen ermöglichen es, dass der Sensor sozusagen nicht nur an der Oberfläche des Kupplungsarmes misst, sondern etwas tiefer. Weiterhin ist der Sensor auf diesem Wege sicher am Kupplungsarm gehalten.

Wie schon angesprochen, befindet sich zwischen den Vertiefungen zweckmäßigerweise eine Aufnahme oder Halterung für ein Sensorgehäuse des Sensors. Die Halterung kann vor die Oberfläche des Kupplungsarms vorstehen, dem Sensor aber dennoch Schutz bieten. Es ist aber auch möglich, dass die Aufnahme oder Halterung ihrerseits als Vertiefung, beispielsweise als eine Art Mulde oder dergleichen, ausgestaltet ist. Dadurch ist der Sensor vertieft gegenüber der Oberfläche oder Außenkontur des Kupplungsarms und somit geschützt am Kupplungsarm untergebracht.

Ein weiterer Vorteil der Erfindung ergibt sich dadurch, dass der Sensor aufgrund der mindestens einen Vertiefung nicht nur sozusagen an der Oberfläche des Kupplungsarms messen kann, sondern auch weiter innen liegende Bereiche des Kupplungsarms erfassen kann. Der Sensor bildet also quasi eine Art Sonde oder weist Sonden auf, die aufgrund der mindestens einen Vertiefung weiter innen im Kernbereich des Kupplungsarms messen können. Unter einer derartigen Sonde kann beispielsweise eine Schraube oder ein Bolzen verstanden werden, der vom Sensor oder Sensorgehäuse absteht und in den Kupplungsarm eingreift.

Die oder eine Vertiefung erstreckt sich zweckmäßigerweise von der Außenumfangskontur des Kupplungsarms bis zu einem Zentralbereich des Kupplungsarms im Bereich der Vertiefung. Der Sensor ist in dem sich in den Zentralbereich erstreckenden Abschnitt, beispielsweise am Bodenbereich eines Sackloches oder einer Durchtrittsbohrung, mit dem Kupplungsarm verbunden, beispielsweise verklemmt oder verklebt, sodass eine Verformung des Zentralbereichs des Kupplungsarms zu einer Betätigung des mindestens einen Sensors führt. Wenn also beispielsweise Schraubbolzen oder dergleichen sich vom Sensorgehäuse bis sozusagen in das Herz oder den Zentralbereich des Kupplungsarms hinein erstrecken und sich der Kupplungsarm verformt, betätigt er die Schraubbolzen oder die sonstigen Verbindungselemente, die ihrerseits wiederum diese Betätigungskraft auf den Sensor übertragen, wodurch dieser betätigt wird. Beispielsweise reichen derartige Vertiefungen oder eine davon bis zu einem Zentrum eines Querschnitts des Kupplungsarms.

Ein Verbindungselement des Kupplungsarms, das mit der Oberfläche des Kupplungsarms in der Vertiefung oder einer Vertiefung in Kontakt ist, kann auch einen Betätigungshebel zur Betätigung des mindestens einen Sensors bilden. Beispielsweise kann ein Bolzen oder Haltezapfen, der vom Sensor, insbesondere dessen Sensorgehäuse, absteht und in den Kupplungsarm eingreift, sozusagen wie ein Hebel durch eine Verformung des Kupplungsarms betätigt werden und dabei den Sensor betätigen, beispielsweise einen Dehnungsmessstreifen ausdehnen oder stauchen oder auch die vorgenannten Sensorteile relativ zueinander bewegen, was beispielsweise eine kapazitive und/oder induktive und/oder optische Messung oder dergleichen andere Abstandsmessung ermöglicht.

Im Bereich einer neutralen Phase oder neutralen Faser des Kupplungsarms sind in der Regel keine oder nur wenige Verformungen messbar. Es ist daher bevorzugt, wenn der mindestens eine Sensor zur Erfassung einer Verformung der Kugelstange außerhalb der neutralen Phase oder neutralen Faser des Kupplungsarms vorgesehen ist. Bevorzugt ist es, wenn die Vertiefung sich zwar von der Außenkontur oder Außenoberfläche des Kupplungsarms nach innen in den Kupplungsarm erstreckt, aber in diesem Falle so tief, dass ein sich möglichst maximal bei Belastung verformender Bereich des Kupplungsarms messbar ist.

Eine bevorzugte Maßnahme sieht daher vor, dass die mindestens eine Vertiefung und der Sensor an einem Krümmungsabschnitt des Kupplungsarms vorgesehen sind. Beispielsweise kann die Vertiefung an einem Innenradius oder einem Außenradius der Krümmung oder des Krümmungsabschnitt des vorgesehen sein. Wenn der Kupplungsarm belastet wird, verformt sich der Krümmungsabschnitt in besonderem Maße, wird also in seinem Radius vergrößert oder verkleinert. An dieser Stelle greift die Sensorik dann vorzugsweise an.

Neben dem vorgenannten Schutz des Sensors durch die Vertiefung ergibt sich auch ein weiterer vorteilhafter Aspekt dadurch, dass durch die Vertiefung der mechanisch belastbare Querschnitt des Kupplungsarms im Bereich der Vertiefung kleiner ist. Mithin ist also durch die mindestens eine Vertiefung die mechanische Belastbarkeit des Kupplungsarms im Bereich der Vertiefung vermindert. Dadurch wird der Kupplungsarm an der Stelle der Vertiefung stärker als ohne Vorhandensein der Vertiefung verformt, was durch den dort angeordneten Sensor entsprechend besser erfassbar ist.

Eine vorteilhafte Maßnahme sieht vor, dass der mindestens eine Sensor Relativbewegungen zwischen Wandabschnitten der Vertiefung misst.

Einander gegenüberliegende Randbereiche der mindestens einen Vertiefung sind zweckmäßigerweise durch den mindestens einen Sensor oder eine Wand, die den Sensor trägt miteinander verbunden. Wenn sich also die Randbereiche relativ zueinander bewegen, betätigen sie auf diesem Wege den Sensor oder die Wand. Der auf der Wand angeordnete Sensor misst dann die Bewegung der Wand, beispielsweise deren Verformung. Eine Variante kann dabei vorsehen, dass die Wand und/oder der Sensor in der Art einer Membran ausgestaltet sind, also einen wesentlich geringeren Querschnitt haben als der Kupplungsarm in der Umgebung. Dadurch wirkt sich eine Verformung des Kupplungsarms im Bereich der Wand oder des Sensors, der die Randbereiche miteinander verbindet, besonders stark aus. Die Wand, die die Randbereiche miteinander verbindet, ist zweckmäßigerweise mit dem Kupplungsarm einstückig. Beispielsweise kann es sich bei der Wand um den Boden eines Sackloches handeln.

Die Wandfläche, die den Sensor trägt oder an der der Sensor angeordnet ist, kann beispielsweise eine Außenwandfläche des Kupplungsarms sein, bis zu der hin sich die Vertiefung, beispielsweise von der gegenüberliegenden Außenwand des Kupplungsarms her, erstreckt.

An dieser Stelle sei bemerkt, dass die den Sensor tragende Wand oder der Sensor, die oder der die Randbereiche miteinander verbindet, nur an manchen Bereichen, also nicht am gesamten Außenumfang, mit den Randbereichen der Vertiefung verbunden sein kann. Eine Variante kann aber auch vorsehen, dass der Sensor oder die Wand am gesamten Außenumfang mit der Innenseite der Vertiefung, also den Randbereichen, verbunden ist, insbesondere ein Stück ist.

Nachfolgend sind erfindungsgemäße Messprinzipien des Sensors erwähnt:
Der mindestens eine Sensor kann beispielsweise ein kapazitives Sensorelement aufweisen. Mithin kann der mindestens eine Sensor also beispielsweise einen kapazitiven Sensor umfassen. Weiterhin ist auch eine induktive Messtechnik vorteilhaft. Der Sensor umfasst beispielsweise mindestens ein induktives Sensorelement. Auch ein Dehnungsmessstreifen ist vorteilhaft als Sensor geeignet. Weiterhin sind verschiedene Methoden der Abstandsmessung denkbar. Umfasst also der Sensor einen Abstandsensor, zum Beispiel einen optischen Sensor oder dergleichen, kann er ebenfalls die Verformung des Kupplungsarms messen.

Bevorzugt ist es, wenn der mindestens eine Sensor ein Sensorgehäuse aufweist, in welchem ein Sensorelement oder eine Sensorfläche geschützt vor Umwelteinflüssen angeordnet ist. Beispielsweise kann ein Dehnungsmessstreifen in dem Gehäuse geschützt angeordnet sein. Aber auch kapazitive Messflächen, beispielsweise bei den vorgenannten Sensorteilen, sind vorteilhaft in einem derartigen Sensorgehäuse geschützt untergebracht.

In dem Sensorgehäuse können auch weitere Komponenten angeordnet sein, so zum Beispiel eine Auswerteeinrichtung, die das Signal des Sensorelements aufbereitet, beispielsweise verstärkt und/oder filtert. Die Auswerteeinrichtung kann also beispielsweise Störeinflüsse, insbesondere Schwingungen, filtern. Die Auswerteeinrichtung kann aber auch außerhalb des Sensorgehäuses oder neben dem Sensorelement angeordnet sein.

Weiterhin ist es vorteilhaft, wenn der Sensor eine Übertragungseinrichtung zur Übertragung seines Sensorsignals an das Bordnetz des Kraftfahrzeugs oder ein Steuergerät der Anhängekupplung, aufweist. Die Übertragungseinrichtung kann beispielsweise zu einer leitungsgebundenen oder drahtlosen Übertragung des Sensorsignals ausgestaltet sein, beispielsweise zu einer Funk-Übertragung.

Die Vertiefung kann eine lang gestreckte Gestalt haben, beispielsweise im Wesentlichen linear entlang einer gedachten Linie verlaufen. Es ist aber auch möglich, dass die Vertiefung eine Krümmung hat, d.h. beispielsweise einen bogenförmigen Verlauf. Der gekrümmte Verlauf kann an den entsprechend gekrümmten Verlauf des Kupplungsarms im Bereich der Vertiefung angepasst sein.

Weiterhin ist es zweckmäßig, wenn die mindestens eine Vertiefung eine Längsgestalt hat und sich entlang einer Längsrichtung des Kupplungsarms im Bereich der Vertiefung oder schräg, insbesondere stumpfwinkelig schräg, zu dieser Längsrichtung des Kupplungsarms erstreckt. Somit ist sozusagen der Messbereich des Sensors in oder an der Vertiefung besonders lang.

Die Vertiefung kommuniziert zweckmäßigerweise mit einer Aufnahme, beispielsweise einer Schraubaufnahme oder einer Bohrung, für einen den Sensor in der Vertiefung haltenden Befestigungsbolzen. Somit kann also beispielsweise ein von dem Sensor, beispielsweise dessen Sensorgehäuse, abragenden Befestigungsabschnitt, beispielsweise Rasthaken oder Bolzen, in diese Aufnahme eingreifen.

Weiterhin ist es zweckmäßig, wenn die Vertiefung mit einer Bohrung oder einem sonstigen Kanal, beispielsweise auch einer seitlich offenen Rinne, kommuniziert, der oder die zu der Aufnahme einer zu dem Sensor führenden Leitung ausgestaltet ist. In dem Kanal, der Rinne oder sonstigen Bohrung kann also beispielsweise eine Leitung zur elektrischen Energieversorgung und/oder zur elektrischen und/oder optischen Übertragung des Sensorsignals des Sensors angeordnet sein. Die Leitung verbindet beispielsweise den Sensor mit einer Auswerteeinrichtung, einem Anhänger-Steuergerät und/oder dem Bordnetz des Kraftfahrzeugs.

Erläutert wurde bereits, dass die Vertiefung auch eine Schraubaufnahme zum Verschrauben des Sensors mit dem Kupplungsarm oder auch eine Rastaufnahme zum Verrasten des Sensors mit dem Kupplungsarm umfassen kann.

Die Vertiefung weist zweckmäßigerweise Kontaktflächen für den Sensor auf. Die Kontaktflächen sind zweckmäßigerweise plane oder ebene Flächen. Der Sensor ist mit den Kontaktflächen zweckmäßigerweise mit senkrechter Kraftrichtung oder im Wesentlichen senkrecht wirkender Kraftrichtung verspannt

Nachfolgend wird die Erfindung anhand von Ausführungsbeispielen näher erläutert. Es zeigen
- Figur 1: eine perspektivische Schrägansicht eines ersten Kupplungsarms,
- Figur 2: eine Querschnittsansicht des Kupplungsarms gemäß Figur 1, etwa entlang einer Schnittlinie A-A,

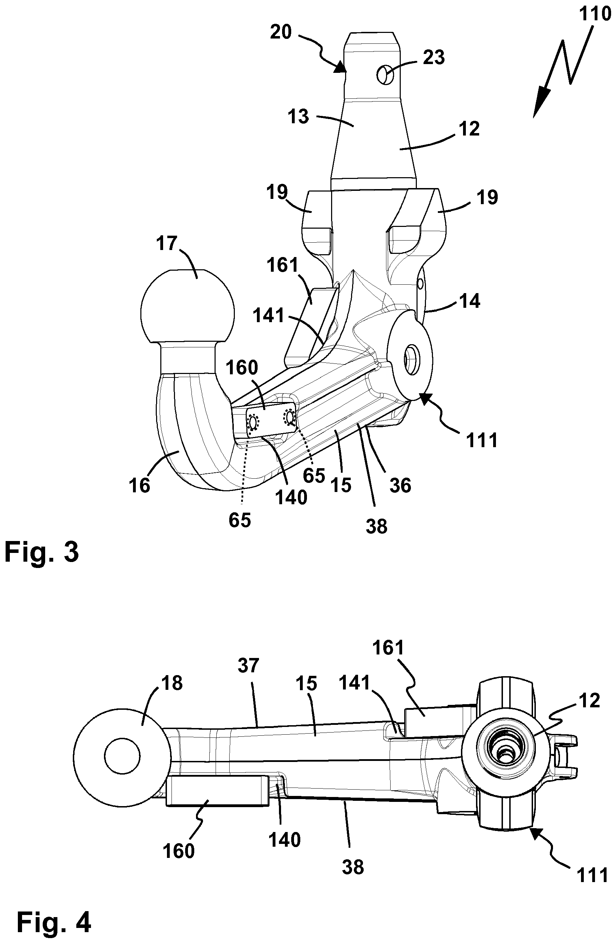

- Figur 3: eine perspektivische Schrägansicht eines zweiten Kupplungsarms, der in
- Figur 4: von oben dargestellt ist,

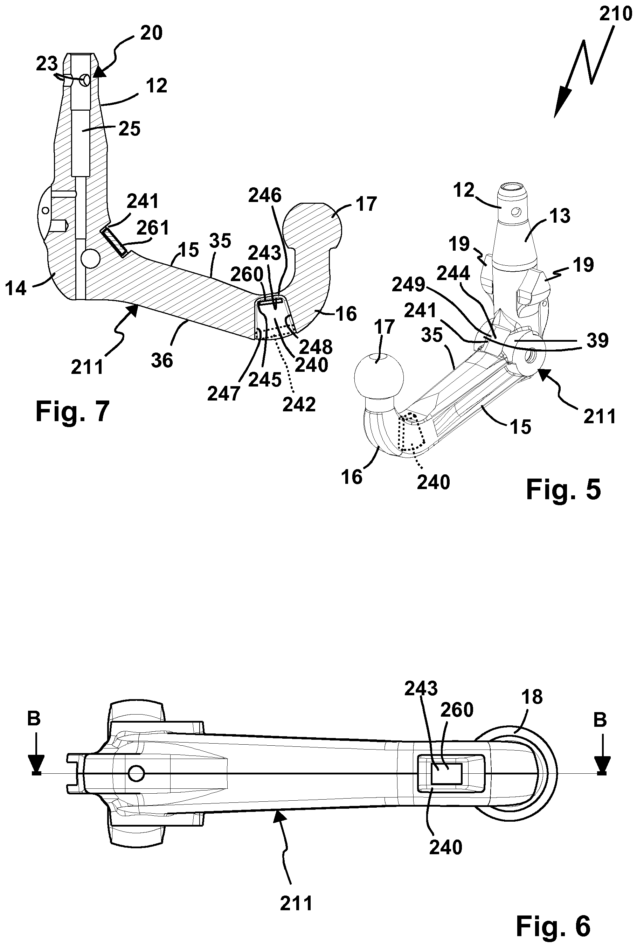

- Figur 5: eine perspektivische Schrägansicht eines dritten Kupplungsarms, der in
- Figur 6: von unten und in
- Figur 7: in einer Querschnittsansicht entlang einer Schnittlinie B-B in Figur 6 dargestellt ist,

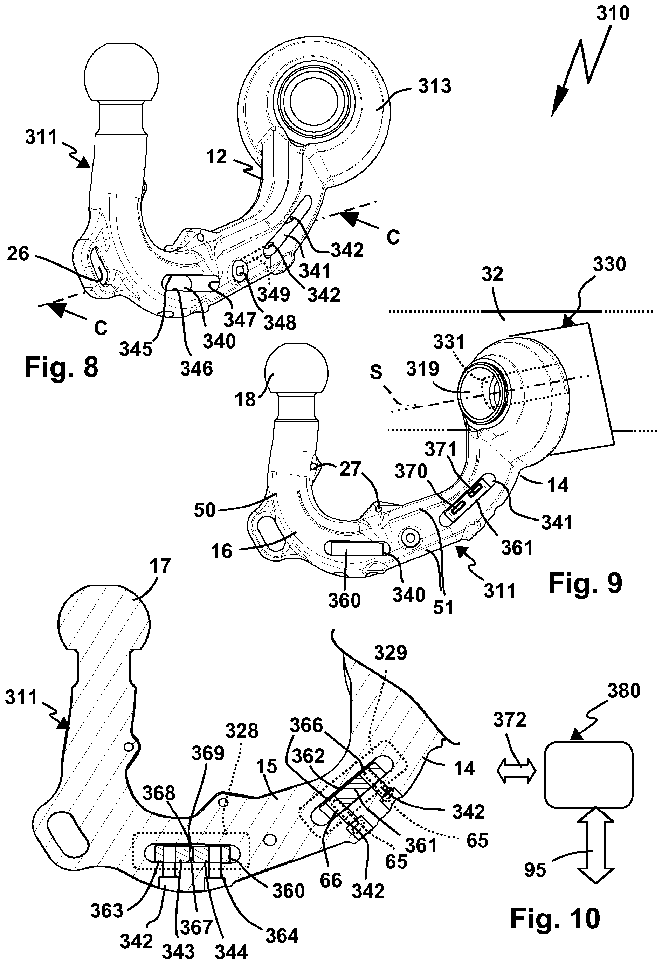

- Figur 8: eine erste und
- Figur 9: eine zweite perspektivische Ansicht eines vierten Kupplungsarms, von dem in
- Figur 10: eine Querschnittsansicht entlang einer Schnittlinie C-C in Figur 8 dargestellt ist.

In der Zeichnung sind mehrere, teilweise gleichartige Anhängekupplungen dargestellt. Insoweit die Komponenten gleich oder gleichartig sind, sind dieselben Bezugsziffern verwendet, teilweise um jeweils 100 unterschiedliche Bezugsziffern.

Eine Anhängekupplung 10, 110, 210, 310 umfasst einen Kupplungsarm 11, 111, 211, 311, wobei jeder dieser Kupplungsarme vorliegend eine ähnliche Grundgeometrie aufweist, die nachfolgend am Beispiel des Kupplungsarms 11 erläutert wird. Diese grundsätzliche Geometrie ist aber nur exemplarisch zu verstehen, d.h. es sind im Rahmen der Erfindung auch andere Kupplungsarme mit ganz anderen Geometrien, beispielsweise im Wesentlichen geradlinige, stangenartige Kupplungsarme, Kupplungsarme mit weiteren oder anderen Krümmungsradien oder dergleichen ohne weiteres erfindungsgemäß ausgestaltbar.

Ein Fahrzeugabschnitt 12 des Kupplungsarms 11 dient zur Verbindung mit einer Fahrzeughalterung 30, 330, die am Kraftfahrzeug 90 befestigt ist. Beispielsweise ist die Fahrzeughalterung 30, 330 an einem Querträger 32 der Anhängekupplung 10, 110, 210, 310 befestigt, der sich am Heck des Kraftfahrzeugs 90 quer erstreckt. Der Querträger 32 ist mit der Karosserie des Kraftfahrzeugs 90 verbunden, beispielsweise durch sich seitlich an den hinteren Kotflügeln des Kraftfahrzeugs 90 entlang erstreckende nicht dargestellte Seitenträger.

Von dem Fahrzeugabschnitt 12 weg erstreckt sich ein Krümmungsabschnitt 14, der in einen Armabschnitt 15 übergeht, an dessen anderem Endbereich wiederum ein weiterer Krümmungsabschnitt 16 vorgesehen ist. Am freien Endbereich des Krümmungsabschnitts 16 befindet sich ein Kuppelstück 17, vorliegend beispielsweise jeweils eine Kupplungskugel 18.

Bei den Anhängekupplungen 10, 110, 210 ist der jeweilige Fahrzeugabschnitt 12 als ein Steckende 13 ausgestaltet, das zum Einstecken oder Anstecken in oder an die Fahrzeughalterung 30 vorgesehen ist. Somit ist der Kupplungsarm 11, 111, 211 lösbar mit der Fahrzeughalterung 30 verbindbar, nämlich anhand einer an sich bekannten Steckverbindung.

Das Steckende 13 kann in eine als Steckaufnahme ausgestaltete Aufnahme 31 der Fahrzeughalterung 30 eingesteckt werden, die beispielsweise eine Hülse umfasst. Die Fahrzeughalterung 30 ist, wie erläutert, am Querträger 32 befestigt.

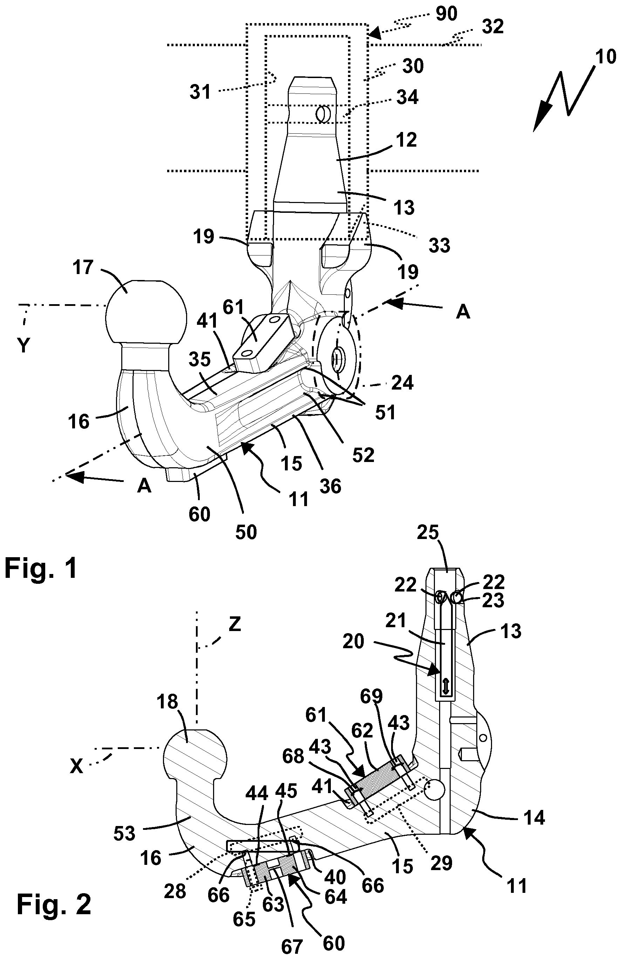

Zum formschlüssigen Halt greifen beispielsweise Keilschrägen 19 am Fußbereich des Steckendes 13 in korrespondierende Formschlussaufnahmen an der Fahrzeughalterung 30 ein. In an sich bekannter Weise wird der Kupplungsarm 11, 111, 211 anhand einer Verriegelungseinrichtung 20 an der Fahrzeughalterung 30 verriegelt. Beispielsweise ist im Fahrzeugabschnitt 12 in einer Führung 25 ein Verdrängerkörper 21, zum Beispiel ein so genannter Sperrbolzen, linear beweglich gelagert (angedeutet durch einen Doppelpfeil in Figur 2), der Formschlusskörper 22, zum Beispiel Kugeln, die in Führungen 23 beweglich aufgenommen sind, nach radial außen in eine korrespondierende Formschlussaufnahme 34 hinein verdrängen kann, beispielsweise in eine Ringnut oder in entsprechende Kalotten. Wenn der Verdrängerkörper 21 in der Zeichnung nach unten bewegt ist, können die Kugeln bzw. Formschlusskörper 22 nach radial innen fallen, sodass sie aus der Formschlussaufnahme 34 heraus bewegt sind und das Steckende 13 aus der Aufnahme 31 herausgezogen werden kann. Der Verdrängerkörper 21 ist beispielsweise anhand eines Handrades, eines Hebels oder eines sonstigen Betätigungselements 24 betätigbar.

Eine Verriegelung, beispielsweise dieser Art, ist auch bei der Anhängekupplung 310 in nicht dargestellter Weise zweckmäßigerweise vorhanden. Deren Kupplungsarm 311 ist allerdings nicht lösbar an der fahrzeugseitigen Fahrzeughalterung 330 befestigt, sondern an der Fahrzeughalterung 330 beweglich gelagert. Die Fahrzeughalterung 330 weist beispielsweise ein Lagerelement, z.B. einen Lagervorsprung 331, auf, an welchem der Fahrzeugabschnitt 12 des Kupplungsarms 311 beweglich, vorliegend drehbar gelagert ist. Der Lagervorsprung 331 greift beispielsweise in eine Lageraufnahme 319 am Fahrzeugabschnitt 12 ein. Somit kann der Kupplungsarm 311 um eine Schwenkachse S zwischen einer Gebrauchsstellung (in der Zeichnung dargestellt) und einer Nichtgebrauchsstellung schwenken, in welcher er näher zum Heck des Kraftfahrzeugs 90 hin verstellt ist, beispielsweise hinter den hinteren Stoßfänger oder die hintere Heckschürze zurückverstellt ist oder dergleichen. Jedenfalls steht der Kupplungsarm 311 in der Gebrauchsstellung weiter vor das Heck des Kraftfahrzeugs 90 vor als in der Nichtgebrauchsstellung.

An dieser Stelle sei bemerkt, dass selbstverständlich auch dauerhaft am Kraftfahrzeug verbleibende Anhängekupplungen, die nicht beweglich sind, erfindungsgemäß ausgestaltet sein können.

An dem Kupplungsarm 311 ist weiterhin noch eine Öse 26 für ein Abreißseil vorgesehen sowie eine Aufnahme oder Halterung 27 für eine nicht dargestellte Steckdose, mit der der ebenfalls nicht dargestellte Anhänger mit elektrischer Energie versorgt werden kann. Diese Maßnahmen können selbstverständlich auch bei den Kupplungsarmen 11, 111, 211 vorgesehen sein.

Der Kupplungsarm 11 weist eine Vertiefung 40 und eine Vertiefung 41 auf, in welchen Sensoren 60, 61 angeordnet sind.

Die Vertiefungen 40, 41 erstrecken sich von einer Außenumfangskontur 50 des Kupplungsarms 11 nach innen, d.h. in den Körper 53 oder Kern des Kupplungsarms 11 hinein. Die Vertiefungen 40, 41 sind keine solchen, die sich beispielsweise zwischen Verstärkungsrippen 51 ausbilden, zum Beispiel eine seitliche Vertiefung 52, sondern dediziert für die Sensoren 60, 61 hergestellte Vertiefungen.

Die Vertiefung 40 ist vorne, am Übergangsbereich zwischen dem Armabschnitt 15 und dem Krümmungsabschnitt 16 vorgesehen. Die Vertiefung 40 befindet sich an der bei Gebrauch des Kupplungsarms 11 unteren Seite (Unterseite 36) des Kupplungsarms 11.

Die Vertiefung 41 ist an der bei Gebrauch des Kupplungsarms 11 oberen Seite (Oberseite 35) des Kupplungsarms 11 angeordnet und befindet sich nahe am Krümmungsabschnitt 14. Die Vertiefung 41 ist sozusagen an der Innenseite bzw. am Innenradius des Krümmungsabschnitts 14 angeordnet oder erstreckt sich davon weg.

Im Bereich der Vertiefungen 40, 41 ist bei einer Belastung des Kupplungsarms 11 durch eine Stützlast, die beispielsweise in Richtung einer Z-Achse wirkt, eine besonders starke Verformung des Kupplungsarms 11 zu vermerken. Aber auch bei einer Belastung auf Zug, d.h. in Richtung einer X-Achse, verformt sich der Kupplungsarm 11 im Bereich der Vertiefungen 40, 41 besonders stark.

Die Sensoren 60, 61 weisen jeweils ein Sensorgehäuse 62 auf, in welchem ein erstes Sensorteil 63 und ein zweites Sensorteil 64 aufgenommen sind. Weitere Komponenten der Sensoren 60, 61 beispielsweise Auswertemittel, zum Beispiel eine entsprechende Auswerteelektronik, Übertragungsmittel, Leitungen, und dergleichen mehr sind aus Gründen der Vereinfachung in der Zeichnung nicht dargestellt. Die Sensorgehäuse 62 sind mittels Befestigungsbolzen 65, beispielsweise Schrauben, die Durchtrittsöffnungen 66 der Sensoren 60, 61 durchdringen und in Vertiefungen 42, die sich von den Vertiefungen 40, 41 weg erstrecken, mit dem Kupplungsarm 11 verbunden. Die Vertiefungen 42 weisen beispielsweise ein Schraubgewinde oder Rastkonturen auf. Anstelle der als Schrauben ausgestalteten Befestigungsbolzen 65 könnten auch beispielsweise Rastvorsprünge, zum Beispiel tannenbaumförmige oder sonstige Rasthaken aufweisende Rastvorsprünge, vorgesehen sein.

Die Sensorteile 63, 64 sind in den Sensorgehäusen 62 relativ zueinander beweglich. Es ist beispielsweise möglich, dass die Sensorgehäuse 62 entsprechend flexibel sind oder in sonstiger Weise die Beweglichkeit der Sensorteile 63, 64 zu lassen. Das Sensorgehäuse 62 ist vereinfacht mit durchgehender Schraffuren dargestellt, wobei der Sensor 61 und der Sensor 62 beispielsweise baugleich sind.

Die Sensorteile 63, 64 sind durch ein Sensorelement 67 miteinander verbunden. Bei dem Sensorelement 67 handelt es sich beispielsweise um einen Dehnungsmessstreifen oder dergleichen anderes Sensorelement, das einen relativen Abstand zwischen den Sensorteilen 63, 64 erfassen kann.

Durch die Verschraubung mit den Befestigungsbolzen 65, zum Beispiel Schrauben, ist ein fester Halt und Kontakt zwischen dem Sensor 61, 60 und der Vertiefung 41, 40 gegeben. Insbesondere sind Kontaktflächen 43, 44 der Sensorteile 63, 64 in direktem und festem Kontakt mit gegenüberliegenden Anlageflächen am Boden der Vertiefung 40, 41.

Eine vorteilhafte Ausführungsform sieht vor, dass die Befestigungsbolzen 65 rechtwinkelig bezüglich der Kontaktflächen 43, 44 wirken, das heißt dass die Kontaktflächen und die Längsachsen der Vertiefungen 43 zueinander rechtwinkelig sind.

Zudem erstrecken sich die Schraubaufnahmen bildenden Vertiefungen 42 bis zu Kernbereichen 28, 29 des Kupplungsarms 11. Somit wird also eine Verformung des Kupplungsarms 11 in diesem Kernbereichen 28, 29 sozusagen über die Schraubbolzen, die gewissermaßen Sonden darstellen, auf den Sensor 60, 61 übertragen. Die sozusagen eine gewisse Schwenkbewegung darstellenden Bewegungen der Sensorteile 63, 64, die durch die Verformung des Kupplungsarms 11 verursacht wird, ist durch Pfeile 68, 69 in der Zeichnung (nur beim Sensor 61) angedeutet.

Das erläuterte Messprinzip mit den Sensoren 60, 61 lässt sich auch beim Kupplungsarm 111, der sozusagen eine Variante des Kupplungsarms 11 darstellt, anwenden. Dort sind allerdings die Vertiefungen 140, 141, die ähnlich wie die Vertiefungen 40, 41 an den Krümmungsabschnitten 16, 14 angeordnet sind, nicht an der Oberseite 35 und der Unterseite 36 angeordnet, sondern an Längsseiten 37, 38.

Insbesondere in Bezug auf den am weitesten vom Heck des Kraftfahrzeugs 90 entfernten Sensor 160, der nahe bei dem Kuppelstück 17 angeordnet ist, kann dieser durch diese Maßnahme etwas geschützter sein, beispielsweise wenn der Kupplungsarm 111 auf einem Untergrund streift oder aufsitzt.

Ein besonderer Vorteil stellt sich jedenfalls dadurch ein, dass die Sensoren 160, 161 anders als die Sensoren 60, 61 sich noch weiter in die Krümmungsabschnitte 16, 14 hinein erstrecken, diese beispielsweise im Wesentlichen komplett erfassen. Die Sensoren 60, 61 sind im Wesentlichen an dem geradlinig verlaufenden Armabschnitt 15 angeordnet, während die Sensoren 160, 161 sich weiter in den gekrümmten Bereich der Krümmungsabschnitte 14, 16 hinein erstrecken. Gerade im Bereich der Krümmungsabschnitte 14, 16 ist jedoch die Verformung des Kupplungsarms 111 besonders stark, das heißt dass die Sensoren 160, 161 noch besser eine Verformung des Kupplungsarms 111 bei einer Belastung durch eine an ihm angreifende Last, beispielsweise eines Lastenträgers oder eines Anhängers, erfassen können.

Die Sensoren 160, 161 sind beispielsweise ebenfalls mittels Schrauben 65 mit dem Kupplungsarm 11 verschraubt.

Beim Kupplungsarm 211 der Anhängekupplung 210 sind Vertiefungen 240, 241 wie bei den vorher erläuterten Kupplungsarmen 11, 111 im Bereich der Krümmungsabschnitte 16, 14 angeordnet. In den Vertiefungen 240, 241 sind Sensoren 260, 261 aufgenommen, beispielsweise Dehnungsmessstreifen. Die Sensoren 260, 261 sind beispielsweise auf Kontaktflächen 243, 244 der Vertiefungen 240, 241 aufgeklebt.

Die Kontaktflächen 243, 244 werden von Bodenflächen 245, 249 der Vertiefungen 240, 241 bereitgestellt oder sind daran vorgesehen.

Die Vertiefung 241 ist an der der Oberseite 35 des Kupplungsarms 211 vorgesehen, sozusagen in der Innenbeuge oder im Innenradius des Krümmungsabschnittes 14. Die Vertiefung 241 ist eine relativ wenig tiefe Mulde, die den Kupplungsarm 211 im Bereich der Krümmung 14 nur unwesentlich schwächt. Gleichwohl ist der Sensor 261 geschützt aufgenommen. Beispielsweise stehen seitliche Schultern 39 nach oben hin vor die Vertiefung 241 und somit auch vor den Sensor 261 vor, sodass dieser sozusagen zwischen den Schultern 39 geschützt aufgenommen ist.

Die Vertiefung 240 bietet dem in ihr aufgenommenen Sensor 260 ebenfalls einen optimalen Schutz. Die Vertiefung 240 erstreckt sich von dem Außenradius des Krümmungsabschnitts 16 her in Richtung des Innenradiusses, d.h. also von der Unterseite 36 zur Oberseite 35 des Kupplungsarms 211.

Seitenwände 247, 248 der Vertiefung 240 erstrecken sich also fast durch den gesamten Querschnitt des Kupplungsarms 211 von der Unterseite 36 zur Oberseite 35 des Kupplungsarms 211, wobei allerdings noch eine Wand 246 sozusagen stehen bleibt, die den Boden der Vertiefung 240 bildet. Die Wand 246 ist sozusagen der Rest des oberseitigen Materials des Kupplungsarms 211, das trotz der "Aushöhlung" durch die Vertiefung 240 stehen bleibt. Mithin ist also die Wand 246 fast schon eine Art Membran, die sehr sensibel auf Verformungen des Kupplungsarms 211 durch ansprechende Belastung, beispielsweise eine Stützlast (eine in Z-Richtung wirkende Last), eine Zuglast (eine in X-Richtung wirkende Last) oder beiden, reagiert. Auch eine den Kupplungsarm 211 tordierende Kraft wirkt sich auf die Membran oder Wand 246 verhältnismäßig stark aus. Der Sensor 260 ist mit der Wand 246 verbunden, erfasst also deren Bewegungen und/oder Verformungen gut.

Die Wand 246 ist vorliegend einstückig mit dem Material des Kupplungsarms 211. Jedenfalls ist sie mit Randbereichen der Vertiefung 240, nämlich den Seitenwänden 247, 248, die im Prinzip Bestandteile einer durchgehenden Innenumfangsfläche bilden, fest verbunden, sodass sich Bewegungen dieser Randbereiche auf die Wand 246 unmittelbar übertragen, diese also verformen, zum Beispiel stauchen, dehnen oder tordieren.

Ein weiterer vorteilhafter Effekt stellt sich dadurch ein, dass der Kupplungsarm 211 im Bereich der Vertiefung 240 in hohem Maße geschwächt ist, was zu einer besonders starken Verformung unter Last führt. Auch das kann durch den Sensor 260 günstig und effektiv erfasst werden.

Zu einem weiteren Schutz des Sensors 260 kann die Vertiefung 240 durch einen Deckel 242 verschlossen sein. Der Deckel 242 ist beispielsweise in der Art eines Stopfens ausgestaltet. Vorteilhaft legt sich der Deckel seitlich an die Seitenwände 247,248, also an den Innenumfang der Vertiefung 240 an.

An dieser Stelle sei bemerkt, dass eine erfindungsgemäße vorgesehene Vertiefung auch beispielsweise durch eine Vergussmasse verschlossen sein kann.

Bei der Anhängekupplung 310 sind Sensoren 360, 361 in Vertiefungen 340, 341 aufgenommen. Die Vertiefungen 340, 341 befinden sich im Bereich der Krümmungsabschnitte 16, 14.

In den Vertiefungen 340, 341 sind die Sensoren 360,361 nahezu vollständig geschützt. Die Sensoren 360, 361 sind ähnlich wie die Sensoren 60, 61 in der Art von Sensormodulen ausgestaltet, d.h. sie können als Ganzes Bauteil in die jeweiligen Vertiefungen 340, 341 (40, 41, 140, 141) eingesetzt werden. Anders als die Sensoren 60, 61 sind jedoch die Sensoren 360, 361 in den Vertiefungen 340, 341 vollständig geschützt.

Die Vertiefungen 340, 341 befinden sich in Kernbereichen 328, 329 des Kupplungsarms 311, sozusagen "im Herz" oder Kern des Kupplungsarms 311. Dort sind besonders starke Verformungen des Kupplungsarms 311 bei Belastung durch Stützlast und/oder Zuglast, die am Kupplungsarm 311 angreift, vorhanden.

Die Vertiefungen 340, 341 haben jeweils eine Längsgestalt. Die Vertiefungen 340, 341 sind zu einer oder beiden der Längsseiten 37, 38 offen. Vorliegend sind die Vertiefungen 340, 341 als Durchgangsöffnungen ausgestaltet, wobei eine taschenartige oder in der Art eines Sackloches ausgestaltete, Beispielseite zu nur einer Seite offene Vertiefung 340, 341 ohne weiteres auch möglich wäre. Die Ausgestaltung der Vertiefungen 340, 341 als Durchtrittsöffnungen hat allerdings den Vorteil, dass der Kupplungsarm 311 sozusagen über den gesamten Querschnitt hinweg dieselbe Belastbarkeit aufweist, mithin also auch dieselbe Verformung zu beobachten ist.

Von den Vertiefungen 340, 341 weg erstrecken sich weitere Vertiefungen 342 bis zum Außenumfang des Kupplungsarms 311, beispielsweise zur Unterseite 36 hin. Somit können also Befestigungsbolzen oder Schrauben 65, mithin also Verbindungselemente, von dem Außenumfang oder der Außenkontur des Kupplungsarms 311 her durch die Vertiefungen 342 (beispielhaft sind 2 vorhandene) in Schraubaufnahmen 366 am Sensorgehäuse 362 des Sensors 360, 361 eingeschraubt werden, wobei sie Sensorteile 363, 364 mit Kontaktflächen 343, 344 der der Vertiefungen 340, 341 verspannen. Die Sensorgehäuse 362 bilden also beispielsweise Zuganker, die sozusagen in den Innenraum einer jeweiligen Vertiefung 340, 341 hinein verspannt sind. Die Schraubaufnahmen 366 könnten beispielsweise auch Rastkonturen zum Verhaken oder Verrasten der Befestigungsbolzen 65 aufweisen.

Die Vertiefungen 340, 341 weisen beispielsweise eine Bodenwandfläche 346, eine Deckenfläche 345 sowie sich zwischen diesen erstreckende Seitenflächen 347 auf. Die Sensorgehäuse 362, mithin also die Sensoren 360, sind mit den Bodenflächen 346 in Kontakt, wo sich die vorgenannten Kontaktflächen 343, 344 befinden.

Es stellt eine vorteilhafte Maßnahme dar, wenn das Sensorgehäuse 362 auch mit weiteren Flächen im Innenraum der Vertiefung 340 oder 341 in Kontakt ist, also formschlüssig in der Vertiefung 340, 341 aufgenommen ist. Es wäre beispielsweise denkbar, dass das jeweilige Sensorgehäuse 362 einen etwas größeren Außenumfang aufweist, insbesondere auch Rundungen zum direkten Kontakt mit den Seitenflächen 347 seitlich außen hat, um insgesamt formschlüssig aufgenommen zu werden. Auch dann wäre noch eine Verspannung mit den Kontaktflächen 343, 344 ohne weiteres möglich.

Die Sensoren 360, 361 sind vorliegend beispielsweise baugleich. Die Sensoren 360, 361 könnten z.B. wie die Sensoren 61, 60 ausgestaltet sein. Vorliegend ist jedoch ein anderes, beispielsweise induktives, optisches oder wie später noch erläutert kapazitives Messprinzip bei den Sensoren 360, 361 vorgesehen.

Die beiden Sensorteile 363, 364 sind jeweils durch eine Schraube 66 mit der jeweiligen Kontaktfläche 343, 344 verspannt. Wenn also der Kupplungsarm 311 eine Verformung, Beispiel durch eine Stützlast (eine in Z-Richtung wirkende Last) und/oder Zuglast (eine in X-Richtung wirkende Last) und/oder seitlich angreifende Last (eine in Y-Richtung wirkende Last) erfährt, bewegen sich die Sensorteile 363, 364 aufeinander zu oder voneinander weg. Dadurch wird ein Spalt 367, der zwischen einander gegenüberliegenden Sensorflächen 368, 369 der Sensorteile 363, 364 vorhanden ist, größer oder kleiner, d.h. der Abstand zwischen den Sensorflächen 368, 369 wird größer oder kleiner.

Es könnte zur Messung eines Abstands zwischen den Sensorflächen 368, 369 oder allgemeiner formuliert zwischen den Sensorteilen 363, 364 beispielsweise ein optischer oder induktiver Sensor oder ein Sensorelement vorgesehen sein.

Vorliegend ist jedoch eine kapazitive Messung vorgesehen, bei der beispielsweise die Sensorflächen 368, 369 kapazitive Flächen darstellen. Beispielsweise bildet die Sensorfläche 368 eine passive kapazitive Fläche, die Sensorfläche 369 die aktive kapazitive Fläche. Beispielsweise sind die Sensorflächen 368, 369 sozusagen Kondensatorflächen.

Wenn der Kupplungsarm 311 eine Verformung erfährt, bewegen sich die Kontaktflächen 343, 344 aufeinander zu oder voneinander weg oder erfahren eine relative Krümmung. Dadurch wird der Spalt 367 enger oder weiter oder auch in seiner Geometrie verformt, beispielsweise indem die Kondensatorflächen oder Sensorflächen 368, 369 schräg oder parallel zueinander stehen.

Von einer oder beiden der Vertiefungen 340, 341 weg erstreckt sich beispielsweise ein Kanal 349, der einerseits zu der Vertiefung 341 oder 340 offen ist, andererseits eine nach außen führende Öffnung 348 aufweist. Durch den Kanal 349 kann eine elektrische Leitung geführt sein, die zu einem jeweiligen Sensor 360, 361 führt.

Es ist auch möglich (in der Zeichnung nicht dargestellt), dass beispielsweise die Vertiefungen 340, 341 durch einen Kanal miteinander verbunden sind, so dass die Sensoren 360, 361 elektrisch und/oder optisch miteinander verbunden sind, beispielsweise für eine gemeinsame Signalübertragung, eine zentrale Auswerteeinrichtung 370 und/oder Übertragungseinrichtung 371, die nur bei einem der Sensoren 360 oder 361 vorhanden sein könnten oder dergleichen.

Die Auswerteeinrichtung 370 wertet beispielsweise Signale 372 aus, die durch Veränderung der Kapazität zwischen den Sensorflächen 368, 369 gebildet sind und gibt anhand der Übertragungseinrichtung 371 diese Signale aus, insbesondere nachdem sie zuvor gefiltert sind, an eine Kennlinie angepasst worden sind oder dergleichen. Die jeweiligen Signale 372 sind ein Indiz für eine Verformung des Kupplungsarms 311 durch Beispiel Stützlast, Zuglast oder quer auf den Kupplungsarm 311 wirkende Kräfte (quer zur Fahrzeuglängsrichtung oder in Fahrzeugquerrichtung des Kraftfahrzeugs 90).

Beispielsweise sendet oder übermittelt die Übertragungseinrichtung 371 die Signale 372 drahtlos oder drahtgebunden an eine fahrzeugseitige, mit einem Bordnetz 95 des Kraftfahrzeugs 90 verbundene Ankopplungseinrichtung, zum Beispiel ein Anhängersteuergerät 380, mit dem weitere Funktionen der Anhängekupplung 10-310 steuerbar und/oder überwachbar sind, zum Beispiel eine Anhängersteckdose mit Strom zu versorgen oder die Funktion einer Beleuchtung des Anhängers oder Lastenträgers zu überwachen ist.

Die Sensorgehäuse 362 sind relativ voluminös. Es versteht sich, dass beispielsweise auch plattenartige Sensorgehäuse oder Sensoren im Rahmen der Erfindung vorteilhaft anwendbar sind. Derartige Sensoren können beispielsweise wie eine Scheibe oder dergleichen in einen Schlitz, als eine schmale Vertiefung, Kupplungsarm eingeschoben werden.

## Patentansprüche

1. Anhängekupplung für ein Kraftfahrzeug zum Anhängen eines Anhängers oder zum Tragen eines Lastenträgers, mit einem ein Kuppelstück (17) zum Ankuppeln des Anhängers oder Lastenträgers vorgesehenen Kupplungsarm (11-311) und mindestens einem an dem Kupplungsarm (11-311) angeordneten Sensor (60, 360) zur Erfassung einer Verformung des Kupplungsarms (11-311) durch eine an dem Kupplungsarm (11-311) angreifende Last, wobei an einer Außenumfangskontur des Kupplungsarms (11-311) mindestens eine Vertiefung (40, 41; 340, 341) vorgesehen ist, in oder an welcher der mindestens eine Sensor (60, 360) angeordnet oder gehalten ist, wobei der mindestens eine Sensor (60, 360) ein erstes Sensorteil (63) und ein zweites Sensorteil (64) aufweist, wobei die Sensorteile (63, 64) in einem Abstand zueinander jeweils mit dem Kupplungsarm (11-311) verbunden, insbesondere verklebt und/oder flächig verspannt, sind, **dadurch gekennzeichnet, dass** die Sensorteile (63, 64) bei einer Verformung des Kupplungsarms (11-311) eine Relativbewegung zueinander machen und die Sensorteile (63, 64) diskret und nicht miteinander verbunden sind und einander gegenüberliegende und/oder zusammenwirkende elektrisch kapazitive Flächen aufweisen.

2. Anhängekupplung nach Anspruch 1, **dadurch gekennzeichnet, dass** die mindestens eine Vertiefung (40, 41; 340, 341) eine mit der Außenkontur des Sensors (60, 360) korrespondierende Innenkontur zur formschlüssigen Aufnahme des Sensors (60, 360) aufweist und/oder der Sensor (60, 360) nicht vor die Außenkontur des Kupplungsarms (11-311) im Bereich der Vertiefung (40, 41; 340, 341) vorsteht und/oder der mindestens eine Sensor (60, 360) durch eine die Vertiefung (40, 41; 340, 341) zumindest teilweise überdeckende Abdeckung oder einen Deckel (242), insbesondere einen Wandabschnitt des Kupplungsarms (11-311), vor Umwelteinflüssen geschützt ist.

3. Anhängekupplung nach Anspruch 1 oder 2, **dadurch gekennzeichnet, dass** der mindestens eine Sensor (60, 360) im Bereich der Vertiefung (40, 41; 340, 341) mit der Oberfläche des Kupplungsarms (11-311) verspannt oder an die Oberfläche angeklemmt oder angeklebt ist.

4. Anhängekupplung nach einem der vorhergehenden Ansprüche, **dadurch gekennzeichnet, dass** der Sensor (60, 360) zwischen den Sensorteilen (63, 64) nicht in Kontakt mit dem Kupplungsarm (11-311) ist.

5. Anhängekupplung nach einem der vorhergehenden Ansprüche, **dadurch gekennzeichnet, dass** in einem Abstand zueinander mindestens zwei Vertiefungen (42) an dem Kupplungsarm (11-311) vorhanden sind, wobei der mindestens eine Sensor (60, 360) in oder an jeder der Vertiefungen (42) mit einem Verbindungsbereich oder einem Verbindungselement, insbesondere einem Bolzen, mit dem Kupplungsarm (11-311) verbunden, insbesondere verankert, ist, so dass der mindestens eine Sensor (60, 360) durch eine relative Bewegung der beiden Vertiefungen (42) zueinander betätigbar ist.

6. Anhängekupplung nach Anspruch 5, **dadurch gekennzeichnet, dass** sich zwischen den Vertiefungen (42) eine insbesondere als Vertiefung (40, 41; 340, 341) ausgestaltete Aufnahme oder Halterung für ein Sensorgehäuse (62; 362) des Sensors (60, 360) erstreckt.

7. Anhängekupplung nach einem der vorhergehenden Ansprüche, **dadurch gekennzeichnet, dass** sich die mindestens eine Vertiefung (40, 41; 340, 341) von der Außenumfangskontur (50) bis zu einem Zentralbereich, insbesondere bis zu einem Zentrum eines Querschnitts, des Kupplungsarms (11-311) im Bereich der Vertiefung (40, 41; 340, 341), erstreckt und der mindestens eine Sensor (60, 360) in dem sich in den Zentralbereich erstreckenden Abschnitt der Vertiefung (40, 41; 340, 341) mit dem Kupplungsarm (11-311) verbunden ist, sodass eine Verformung des Zentralbereichs zu einer Betätigung des mindestens einen Sensors (60, 360) führt.

8. Anhängekupplung nach einem der vorhergehenden Ansprüche, **dadurch gekennzeichnet, dass** der mindestens eine Sensor (60, 360) zur Erfassung einer Verformung der Kugelstange außerhalb der neutralen Phase oder neutralen Faser des Kupplungsarms (11-311) vorgesehen ist und/oder die mindestens eine Vertiefung (40, 41; 340, 341) die mechanische Belastbarkeit des Kupplungsarms (11-311) im Bereich der Vertiefung (40, 41; 340, 341) vermindert und/oder die mindestens eine Vertiefung (40, 41; 340, 341) und der Sensor (60, 360) an einem Krümmungsabschnitt des Kupplungsarms (11-311) vorgesehen sind.

9. Anhängekupplung nach einem der vorhergehenden Ansprüche, **dadurch gekennzeichnet, dass** einander gegenüberliegende Randbereiche der mindestens einen Vertiefung (40, 41; 340, 341) durch den mindestens einen Sensor (60, 360) und/oder durch eine den Sensor (60, 360) tragende, mit den Randbereichen fest verbundene oder einstückige, insbesondere in der Art einer Membran ausgestaltete, Wand (246) verbunden sind.

10. Anhängekupplung nach einem der vorhergehenden Ansprüche, **dadurch gekennzeichnet, dass** der mindestens eine Sensor (60, 360) ein kapazitives Sensorelement und/oder ein induktives Sensorelement und/oder einen Dehnungsmessstreifen (67) und/oder einen Abstandsensor und/oder ein Sensorgehäuse (62; 362) aufweist, in welchem mindestens ein Sensorelement (67), insbesondere einen Dehnungsmessstreifen oder eine kapazitive Messfläche (368, 369), vor Umwelteinflüssen geschützt angeordnet sind.

11. Anhängekupplung nach einem der vorhergehenden Ansprüche, **dadurch gekennzeichnet, dass** die mindestens eine Vertiefung (40, 41; 340, 341) eine sich entlang einer Längsrichtung des Kupplungsarms (11-311) oder schräg zu einer Längsrichtung des Kupplungsarms (11-311) erstreckende Längsgestalt aufweist und/oder mit mindestens einer Aufnahme für einen den Sensor (60, 360) in der Vertiefung (40, 41; 340, 341) haltenden Befestigungsbolzen (65) und/oder einem Kanal (349) für eine zu dem mindestens einen Sensor (60, 360) führende Leitung kommuniziert.

12. Anhängekupplung nach einem der vorhergehenden Ansprüche, **dadurch gekennzeichnet, dass** die mindestens eine Vertiefung (40, 41; 340, 341) eine den mindestens einen Sensor aufnehmende Aufnahme aufweist, von der sich mindestens eine Bolzen-Aufnahme für einen Befestigungsbolzen zur Befestigung des Sensors (60, 360) in der Aufnahme bis zu der Außenkontur des Kupplungsarms (11-311) weg erstreckt, wobei der Befestigungsbolzen von der Außenkontur her die Bolzen-Aufnahme durchdringend mit dem Sensor (60, 360) verbunden ist.

13. Anhängekupplung nach einem der vorhergehenden Ansprüche, **dadurch gekennzeichnet, dass** die mindestens eine Vertiefung (40, 41; 340, 341) eine den Kupplungsarm (11-311) durchsetzende Durchgangsbohrung und/oder ein Sackloch oder eine Tasche und/oder eine Mulde und/oder eine Schraubaufnahme zum Verschrauben oder Rastaufnahme zum Verrasten des mindestens einen Sensors (60, 360) an dem Kupplungsarm (11-311) umfasst.

14. Sensormodul für eine Anhängekupplung für ein Kraftfahrzeug, die einen Kupplungsarm (11-311) zum Anhängen eines Anhängers oder zum Tragen eines Lastenträgers aufweist, wobei das Sensormodul (60, 360) mindestens einen zur Anordnung an dem Kupplungsarm (11-311) vorgesehenen Sensor (60, 360) zur Erfassung einer Verformung des Kupplungsarms (11-311) durch eine an dem Kupplungsarm (11-311) angreifende Last aufweist, wobei das Sensormodul eine Außenumfangskontur (50) aufweist, die mindestens eine Innenumfangskontur einer an einer Außenumfangskontur (50) des Kupplungsarms (11-311) vorgesehenen Vertiefung (40, 41; 340, 341) angepasst ist, in oder an welcher der mindestens eine Sensor (60, 360) angeordnet oder gehalten ist, **dadurch gekennzeichnet, dass** der mindestens eine Sensor (60, 360) ein erstes Sensorteil (63) und ein zweites Sensorteil (64) aufweist, wobei die Sensorteile (63, 64) dazu vorgesehen sind, in einem Abstand zueinander jeweils mit dem Kupplungsarm (11-311) verbunden, insbesondere verklebt und/oder flächig verspannt, zu sein und bei einer Verformung des Kupplungsarms (11-311) eine Relativbewegung zueinander zu machen, und wobei die Sensorteile (63, 64) diskret und nicht miteinander verbunden sind und einander gegenüberliegende und/oder zusammenwirkende elektrisch kapazitive Flächen aufweisen.

## Claims

1. Trailer coupling for a motor vehicle for attaching a trailer or supporting a load carrier, with a coupling arm (11-311) provided with a coupling element (17) for coupling-on the trailer or load carrier, and at least one sensor (60, 360) mounted on the coupling arm (11-311), for detecting a deformation of the coupling arm (11-311) due to a load acting on the coupling arm (11-311), wherein there is provided on an outer peripheral contour of the coupling arm (11-311) at least one recess (40, 41; 340, 341), in or on which the sensor or sensors (60, 360) is or are mounted or held, wherein the sensor or sensors (60, 360) has or have a first sensor part (63) and a second sensor part (64), wherein the sensor parts (63, 64) are each connected to the coupling arm (11-311) at a distance from one another, in particular bonded and/or clamped flat, **characterised in that** the sensor parts (63, 64) make a relative movement towards one another during deformation of the coupling arm (11-311) and the sensor parts (63, 64) are discrete and not connected to one another and have electrically capacitive surfaces lying opposite one another and/or interacting.

2. Trailer coupling according to claim 1, **characterised in that** recess or recesses (40, 41; 340, 341) has or have an internal contour corresponding to the external contour of the sensor (60, 360) for form-fitting location of the sensor (60, 360), and/or the sensor (60, 360) does not extend beyond the external contour of the coupling arm (11-311) in the area of the recess (40, 41; 340, 341), and/or the sensor or sensors (60, 360) is or are protected from environmental influences by a cover or lid (242) at least partly covering the recess (40, 41; 340, 341), in particular a wall section of the coupling arm (11-311).

3. Trailer coupling according to claim 1 or 2, **characterised in that** the sensor or sensors (60, 360) is or are clamped to the surface of the coupling arm (11-311) in the area of the recess (40, 41; 340, 341), or connected or bonded to the surface.

4. Trailer coupling according to any of the preceding claims, **characterised in that** the sensor (60, 360) is not in contact with the coupling arm (11-311) between the sensor parts (63, 64).

5. Trailer coupling according to any of the preceding claims, **characterised in that** at least two recesses (42) are provided on the coupling arm (11-311) at a distance from one another, wherein the sensor or sensors (60, 360) is or are connected to the coupling arm (11-311), in particular anchored, in or at each of the recesses (42), by a connecting area or a connecting element, in particular a bolt, so that the sensor or sensors (60, 360) may be actuated by a relative movement of the two recesses (42) towards one another.

6. Trailer coupling according to claim 5, **characterised in that** a location or mounting for a sensor housing (62; 362) of the sensor (60, 360), in particular in the form of a recess (40, 41; 340, 341), extends between the recesses (42).

7. Trailer coupling according to any of the preceding claims, **characterised in that** the recess or recesses (40, 41; 340, 341) extend(s) from the outer peripheral contour (50) as far as a central area, in particular up to a centre of a cross-section, of the coupling arm (11-311) in the area of the recess (40, 41; 340, 341) and the sensor or sensors (60, 360) is or are connected to the coupling arm (11-311) in the section of the recess (40, 41; 340, 341) extending into the central area, so that a deformation of the central area leads to actuation of the sensor or sensors (60, 360).

8. Trailer coupling according to any of the preceding claims, **characterised in that** the sensor or sensors (60, 360) are provided to detect a deformation of the knee-joint bar outside the neutral phase or neutral fibre of the coupling arm (11-311) and/or the recess or recesses (40, 41; 340, 341) reduce the mechanical loadability of the coupling arm (11-311) in the area of the recess (40, 41; 340, 341) and/or the recess or recesses (40, 41; 340, 341) and the sensor (60, 360) are provided on a curved section of the coupling arm (11-311).

9. Trailer coupling according to any of the preceding claims, **characterised in that** edge areas of the recess (40, 41; 340, 341) or recesses lying opposite one another are joined together by the sensor or sensors (60, 360) and/or by a wall (246) carrying the sensor (60, 360), permanently joined to or integral with the edge areas, in particular in the manner of a membrane.

10. Trailer coupling according to any of the preceding claims, **characterised in that** the sensor or sensors (60, 360) has or have a capacitive sensor element and/or an inductive sensor element and/or a strain gauge (67) and/or a distance sensor and/or a sensor housing (62; 362), in which at least one sensor element (67), in particular a strain gauge or a capacitive measuring surface (368, 369), is mounted with protection from environmental influences.

11. Trailer coupling according to any of the preceding claims, **characterised in that** the recess or recesses (40, 41; 340, 341) has or have a longitudinal shape extending along an axial direction of the coupling arm (11-311) or at an angle to an axial direction of the coupling arm (11-311) and/or communicate with at least one location for a mounting bolt (65) holding the sensors (60, 360) in the recess (40, 41; 340, 341) and/or a passage (349) for a line leading to the sensor or sensors (60, 360).

12. Trailer coupling according to any of the preceding claims, **characterised in that** the recess or recesses (40, 41; 340, 341) has or have a location holding the sensor or sensors, away from which at least one bolt location for a mounting bolt for mounting the sensor (60, 360) extends as far as the external contour of the coupling arm (11-311), wherein the mounting bolt is connected to the sensors (60, 360), passing through the bolt location from the external contour.

13. Trailer coupling according to any of the preceding claims, **characterised in that** the recess or recesses (40, 41; 340, 341) include(s) a through hole passing through the coupling arm (11-311) and/or a blind hole or a pocket and/or a trough and/or a screw socket for screwing or a latching location for latching the sensor or sensors (60, 360) to the coupling arm (11-311).

14. Sensor module for a trailer coupling for a motor vehicle, which has a coupling arm (11-311) for attaching a trailer or for supporting a load carrier, wherein the sensor module (60, 360) has a sensor or sensors (60, 360) provided for mounting on the coupling arm (11-311) to detect deformation of the coupling arm (11-311) by a load acting on the coupling arm (11-311), wherein the sensor module has an outer peripheral contour (50) which is matched to at least one inner peripheral contour of a recess (40, 41; 340, 341), provided on an outer peripheral contour (50) of the coupling arm (11-311), in or on which the sensor or sensors (60, 360) is or are mounted or held, **characterised in that** the sensor or sensors (60, 360) has or have a first sensor part (63) and a second sensor part (64), wherein the sensor parts (63, 64) are provided for connection to the coupling arm (11-311) at a distance from one another, in particular bonded and/or clamped flat, and to make a relative movement towards one another during deformation of the coupling arm (11-311), and wherein the the sensor parts (63, 64) are discrete and not connected to one another and have electrically capacitive surfaces lying opposite one another and/or interacting.

## Revendications

1. Attelage de remorque pour un véhicule automobile pour attacher une remorque ou pour supporter un support de charges, avec un bras d'attelage (11 - 311) une pièce d'accouplement (17) prévu pour accoupler la remorque ou le support de charges et au moins un capteur (60, 360) disposé au niveau du bras d'attelage (11 - 311) pour détecter une déformation du bras d'attelage (11 - 311) par une charge s'engageant au niveau du bras d'attelage (11 - 311), dans lequel au moins un renfoncement (40, 41 ; 340, 341) est prévu au niveau d'un contour périphérique extérieur du bras d'attelage (11 - 311), dans lequel ou au niveau duquel l'au moins un capteur (60, 360) est disposé ou maintenu, dans lequel l'au moins un capteur (60, 360) présente une première partie de capteur (63) et une seconde partie de capteur (64), dans lequel les parties de capteur (63, 64) sont reliées, en particulier assemblées par collage et/ou assemblées par serrage à plat, à une distance l'une par rapport à l'autre, respectivement au bras d'attelage (11 - 311), **caractérisé en ce que** les parties de capteur (63, 64) effectuent, lors d'une déformation du bras d'attelage (11 - 311), un déplacement relatif l'une par rapport à l'autre et les parties de capteur (63, 64) sont discrètes et ne sont pas reliées l'une à l'autre et présentent des surfaces électriquement capacitives se faisant face les unes les autres et/ou coopérant.

2. Attelage de remorque selon la revendication 1, **caractérisé en ce que** l'au moins un renfoncement (40, 41 ; 340, 341) présente un contour intérieur correspondant au contour extérieur du capteur (60, 360) pour recevoir par complémentarité de forme le capteur (60, 360) et/ou le capteur (60, 360) ne fait pas saillie du contour extérieur du bras d'attelage (11 - 311) dans la zone du renfoncement (41, 41 ; 340, 341) et/ou l'au moins un capteur (60, 360) est protégé contre des influences extérieures par un recouvrement ou un couvercle (242) recouvrant au moins en partie le renfoncement (40, 41 ; 340, 341), en particulier une section de paroi du bras d'attelage (11 - 311).

3. Attelage de remorque selon la revendication 1 ou 2, **caractérisé en ce que** l'au moins un capteur (60, 360) est assemblé par serrage dans la zone du renfoncement (40, 41 ; 340, 341) à la surface du bras d'attelage (11 - 311) ou est coincé ou collé au niveau de la surface.

4. Attelage de remorque selon l'une quelconque des revendications précédentes, **caractérisé en ce que** le capteur (60, 360) n'est pas en contact entre les parties de capteur (63, 64) avec le bras d'attelage (11 - 311).

5. Attelage de remorque selon l'une quelconque des revendications précédentes, **caractérisé en ce qu'**au moins deux renfoncements (42) sont présents au niveau du bras d'attelage (11 - 311) à une distance l'un par rapport à l'autre, dans lequel l'au moins un capteur (60, 360) est relié, en particulier assemblé par ancrage, dans ou au niveau de chacun des renfoncements (42), par une zone de liaison ou un élément de liaison, en particulier un boulon, au bras d'attelage (11 - 311) de sorte que l'au moins un capteur (60, 360) puisse être actionné par un déplacement relatif des deux renfoncements (42) l'un par rapport à l'autre.

6. Attelage de remorque selon la revendication 5, **caractérisé en ce qu'**un logement ou une fixation configuré en particulier en tant que renfoncement (40, 41 ; 340, 341) pour un boîtier de capteur (62 ; 362) du capteur (60, 360) s'étend entre les renfoncements (42).

7. Attelage de remorque selon l'une quelconque des revendications précédentes, **caractérisé en ce que** l'au moins un renfoncement (40, 41 ; 340, 341) s'étend depuis le contour périphérique extérieur (50) jusqu'à une zone centrale, en particulier jusqu'à un centre d'une section transversale, du bras d'attelage (11 - 311) dans la zone du renfoncement (40, 41 ; 340, 341) et l'au moins un capteur (60, 360) est relié dans la section, s'étendant dans la zone centrale, du renfoncement (40, 41 ; 340, 341) au bras d'attelage (11 - 311) de sorte qu'une déformation de la zone centrale conduise à un actionnement de l'au moins un capteur (60, 360).

8. Attelage de remorque selon l'une quelconque des revendications précédentes, **caractérisé en ce que** l'au moins un capteur (60, 360) est prévu pour détecter une déformation de la barre à boule en dehors de la phase neutre ou de la fibre neutre du bras d'attelage (11 - 311) et/ou l'au moins un renfoncement (40, 41 ; 340, 341) réduit la capacité de charge mécanique du bras d'attelage (11 - 311) dans la zone du renfoncement (40, 41 ; 340, 341) et/ou l'au moins un renfoncement (40, 41 ; 340, 341) et le capteur (60, 360) sont prévus au niveau d'une section d'incurvation du bras d'attelage (11 - 311).

9. Attelage de remorque selon l'une quelconque des revendications précédentes, **caractérisé en ce que** des zones de bord se faisant face les unes les autres de l'au moins un renfoncement (40 41 ; 340, 341) sont reliées par l'au moins un capteur (60, 360) et/ou par une paroi (246) supportant le capteur (60, 360) reliée de manière solidaire aux zones de bord ou d'un seul tenant, configurée en particulier à la manière d'une membrane.

10. Attelage de remorque selon l'une quelconque des revendications précédentes, **caractérisé en ce que** l'au moins un capteur (60, 360) présente un élément de capteur capacitif et/ou un élément de capteur inductif et/ou une jauge extensométrique (67) et/ou un capteur de distance et/ou un boîtier de capteur (62 ; 362), dans lequel sont disposés de manière protégée contre des influences extérieures au moins un élément de capteur (67), en particulier une jauge extensométrique ou une surface de mesure (368, 369) capacitive.

11. Attelage de remorque selon l'une quelconque des revendications précédentes, **caractérisé en ce que** l'au moins un renfoncement (40, 41 ; 340, 341) présente une configuration longitudinale s'étendant le long d'un sens longitudinal du bras d'attelage (11 - 311) ou de manière inclinée par rapport à un sens longitudinal du bras d'attelage (11 - 311) et/ou communique avec au moins un logement pour un boulon de fixation (65) maintenant le capteur (60, 360) dans le renfoncement (40, 41 ; 340, 341) et/ou avec un canal (349) pour un conduit menant vers l'au moins un capteur (60, 360).

12. Attelage de remorque selon l'une quelconque des revendications précédentes, **caractérisé en ce que** l'au moins un renfoncement (40, 41 ; 340, 341) présente un logement logeant l'au moins un capteur, duquel s'étend de manière à s'éloigner au moins un logement de boulon pour un boulon de fixation pour fixer le capteur (60, 360) dans le logement jusqu'au contour extérieur du bras d'attelage (11 - 311), dans lequel le boulon de fixation est relié depuis le contour extérieur au capteur (60, 360) en traversant le logement de boulon.

13. Attelage de remorque selon l'une quelconque des revendications précédentes, **caractérisé en ce que** l'au moins un renfoncement (40, 41 ; 340, 341) comprend un alésage de passage traversant le bras d'attelage (11 - 311) et/ou un trou borgne ou un compartiment et/ou une cavité et/ou un logement de vissage pour visser ou un logement d'enclenchement pour enclencher l'au moins un capteur (60, 360) au niveau du bras d'attelage (11 - 311).

14. Module de capteur pour un attelage de remorque pour un véhicule automobile, qui présente un bras d'attelage (11 - 311) pour attacher une remorque ou pour supporter un support de charges, dans lequel le module de capteur (60, 360) présente au moins un capteur (60, 360) prévu pour être disposé au niveau du bras d'attelage (11 - 311) pour détecter une déformation du bras d'attelage (11 - 311) par une charge s'engageant au niveau du bras d'attelage (11 - 311), dans lequel le module de capteur présente un contour périphérique extérieur (50), l'au moins un contour périphérique intérieur d'un renfoncement (40, 41 ; 340, 341) prévu au niveau d'un contour périphérique extérieur (50) du bras d'attelage (11 - 311) est adapté, dans lequel ou au niveau duquel l'au moins un capteur (60, 360) est disposé ou maintenu, **caractérisé en ce que** l'au moins un capteur (60, 360) présente une première partie de capteur (63) et une seconde partie de capteur (64), dans lequel les parties de capteur (63, 64) sont prévues pour être reliées, en particulier assemblées par collage et/ou serrage à plat, à une distance l'une par rapport à l'autre, respectivement au bras d'attelage (11 - 311) et pour effectuer, lors d'une déformation du bras d'attelage (11 - 311), un déplacement relatif l'une par rapport à l'autre, et dans lequel les parties de capteur (63, 64) sont discrètes et ne sont pas reliées l'une à l'autre et présentent des surfaces électriquement capacitives se faisant face les unes les autres et/ou coopérant.
